# FASCICULE DE BREVET EUROPEEN

(11) **EP 1 230 060 B1**
(45) Date de publication et mention de la délivrance du brevet: **12.05.2004**
(21) Numéro de dépôt: 00966263.6
(22) Date de dépôt: 03.10.2000
(51) Int. Cl.: B23K 7/00

(54) **PROCEDE D'OXYCOUPAGE D'UNE PIECE D'ACIER, ET DISPOSITIF DE MISE EN OEUVRE DUDIT PROCEDE**
VERFAHREN UND VORRICHTUNG ZUM BRENNSCHNEIDEN EINES AUS STAHL HERGESTELLEN WERKSTÜCKES
METHOD FOR OXYACETYLENE-CUTTING A PIECE OF STEEL AND DEVICE FOR CARRYING OUT THIS METHOD

(30) Priorité: 19.10.1999 FR 9913004
(43) Date de publication de la demande: 14.08.2002
(73) Titulaire: Prioretti, Guy, 57100 Thionville (FR); Prioretti, Véronique, 57100 Thionville (FR); Prioretti-Hacking, Françoise, 57100 Thionville (FR); Prioretti, Jean-Michel, 57100 Manom (FR)
(72) Inventeur: Prioretti, Guy, 57100 Thionville (FR); Prioretti, Véronique, 57100 Thionville (FR); Prioretti-Hacking, Françoise, 57100 Thionville (FR); Prioretti, Jean-Michel, 57100 Manom (FR)
(74) Mandataire: Jaunez, Xavier
(86) Numéro de dépôt international: PCT/FR2000/002737
(87) Numéro de publication internationale: WO 2001/028727

(56) Documents cités:
- EP-A- 0 017 807
- DE-A- 2 943 539
- US-A- 2 288 026
- US-A- 2 541 344

## Description

La présente invention concerne un procédé et un dispositif d'oxycoupage de pièces en acier, telles que des brames, des tôles, des billettes et des blooms.

L'arrière-plan technologique est illustré par le document EP-A-0 639 416 qui décrit une installation d'oxycoupage à deux lignes, dont chacune comporte un chariot mobile à chalumeau d'oxycoupage de type pendulaire. On pourra également se référer au document US-A-2 820 420 qui décrit un chalumeau d'oxycoupage monté en porte-à-faux sur un chariot déplaçable horizontalement, et au document WO-A-96/20818 qui décrit un pont roulant supportant un bras de travail vertical extensible télescopiquement.

On pourra également se référer aux documents US-A-2 288 026 et US-A-2 541 344.

L'oxycoupage de pièces en acier, et plus spécifiquement en sidérurgie, de brames, de tôles, de billettes et de blooms, génère généralement au niveau de la surface de sortie du jet d'oxycoupage la formation de résidus de métal fondu, non brûlé, dont une partie qui n'est pas éjectée dans l'atmosphère ambiante par le jet d'oxycoupage se colle et se fige sur les lèvres de sortie de la saignée de coupe, et ce sur toute la longueur de la saignée, en formant un cordon de coupe en forme de bourrelet. De ce fait, chaque bord de la saignée de la sortie de coupe présente, en fin du processus de coupe, un bourrelet qui est constitué d'un mélange de métal de base et d'oxyde de fer. Ce cordon intempestif adhère fortement au corps des pièces oxycoupées, et il s'avère nécessaire de prévoir une opération supplémentaire d'enlèvement de ces cordons qui sont plus ou moins importants suivant les nuances d'acier rencontrées, les vitesses de coupe, les types et les réglages du chalumeau d'oxycoupage. L'enlèvement des cordons de coupe est généralement effectué par ébavurage, soit manuellement au chalumeau, au burin ou à la meule, soit encore mécaniquement au moyen d'une machine adaptée. Dans tous les cas, il s'agit là d'une opération de reprise qui implique un coût très pénalisant pour le prix de revient de la production.

Pour résoudre ce problème, il a déjà été proposé un procédé d'oxycoupage d'une pièce d'acier, dans lequel on positionne un organe de coupe de façon que le jet d'oxycoupage soit dirigé vers une première face de la pièce de coupe et un organe d'ébavurage de façon que le jet d'ébavurage soit dirigé vers une seconde face opposée à la première en direction du point de sortie du jet d'oxycoupage, afin de réaliser un ébavurage simultané du cordon de coupe se formant sur ladite seconde face, le positionnement des organes de coupe et d'ébavurage étant tel que le jet d'oxycoupage attaque la face supérieure de la pièce selon une direction sensiblement verticale, tandis que le jet d'ébavurage attaque la face inférieure de ladite pièce selon une direction oblique restant pointée vers le point de sortie du jet d'oxycoupage, la coupe et l'ébavurage simultané se faisant par déplacement horizontal synchrone des organes de coupe et d'ébavurage. On pourra à ce titre se référer aux documents EP-A-0 017 807 (& US-A-4 336 078) et DE-A-29 43 539.

Dans le cas des coulées continues de billettes, on a déjà proposé un dispositif d'oxycoupage et d'ébavurage associé, dans lequel on positionne un organe de coupe de façon que le jet d'oxycoupage soit dirigé vers une première face de la pièce à couper et un organe d'ébavurage de façon que le jet d'ébavurage soit dirigé vers une seconde face opposée à la première en direction du point de sortie du jet d'oxycoupage, afin de réaliser un ébavurage simultané du cordon de coupe se formant sur ladite seconde face. Un tel procédé est décrit dans le document WO-A-99/16570. Dans ce procédé, le positionnement de l'organe de coupe et de l'organe d'ébavurage est réalisé au moyen d'une prise de référence directe sur la billette de coulée continue au moyen d'une pince mobile. Une fois la prise de référence réalisée, on descend l'organe de coupe et l'organe d'ébavurage parallèlement aux faces latérales de la billette, de façon à effectuer progressivement une coupe du haut vers le bas par une attaque horizontale d'une face latérale de la billette, et un ébavurage simultané du cordon de coupe se formant sur l'autre face latérale par une attaque de cette autre face latérale constamment dirigée vers le bas. Ainsi, dans cette technique, le jet d'oxycoupage est horizontal, et dirigé vers une face latérale de la billette, et ce tout au long du processus de coupe.

Cette technique est certes intéressante pour l'oxycoupage de billettes de coulée continue, mais elle reste encore très limitative en raison d'une inadaptation à l'oxycoupage d'autres produits d'acier.

Tout d'abord, on peut observer que ce procédé n'est pas adaptable à l'oxycoupage de brames ou autres produits de grande largeur. En effet, comme l'oxycoupage est réalisé horizontalement, un tel agencement est rédhibitoire lorsque le produit à découper est de grande largeur, comme c'est le cas pour des brames ou des tôles. Il est en effet utopique d'envisager d'enserrer le produit à couper par les pinces de référence, et surtout de réaliser un jet d'oxycoupage suffisamment puissant pour exercer la découpe sur toute la largeur du produit.

Cette technique est également inadaptée pour des opérations de refendage, c'est-à-dire de coupe des produits dans le sens de leur longueur, opération qui est souvent effectuée sur des brames ou des tôles. Cette inadaptation est à la fois physique pour les brames en coulée continue, et économique pour les brames et tôles hors coulée continue en raison d'une nécessaire manipulation onéreuse des produits ou de l'importance et de la complexité des installations capables de mettre en oeuvre cette technique.

Dans tous les cas, on a constaté dans la pratique la présence de fumées importantes dans la zone de sortie du jet d'oxycoupage, ces émissions de fumées étant générées par la post-combution des résidus du métal fondu non brûlé, éjectés par le jet d'oxycoupage et le jet d'ébavurage.

L'invention vise à concevoir une technique d'oxycoupage permettant d'éviter les inconvénients et/ou limitations précités.

L'invention a ainsi pour objet un procédé d'oxycoupage d'une pièce en acier et un dispositif de mise en oeuvre de ce procédé, qui soit capable d'effectuer une coupe régulière de pièces d'acier de types très divers, sans présence de cordon de coupe, tout en réduisant simultanément les émissions de fumées, et ce quelle que soit la largeur du produit à couper. La technique recherchée doit être en particulier capable d'effectuer les opérations de refendage dans des conditions techniquement et économiquement optimales.

Ce problème est résolu conformément à l'invention grâce à un procédé d'oxycoupage d'une pièce d'acier, dans lequel on positionne un organe de coupe de façon que le jet d'oxycoupage soit dirigé vers une première face de la pièce de coupe et un organe d'ébavurage de façon que le jet d'ébavurage soit dirigé vers une seconde face opposée à la première en direction du point de sortie du jet d'oxycoupage, afin de réaliser un ébavurage simultané du cordon de coupe se formant sur ladite seconde face, le positionnement des organes de coupe et d'ébavurage étant tel que le jet d'oxycoupage attaque la face supérieure de la pièce selon une direction sensiblement verticale, tandis que le jet d'ébavurage attaque la face inférieure de ladite pièce selon une direction oblique restant pointée vers le point de sortie du jet d'oxycoupage, la coupe et l'ébavurage simultané se faisant par déplacement horizontal synchrone des organes de coupe et d'ébavurage, ledit procédé étant remarquable en ce qu'on positionne sous la pièce un organe de pulvérisation de façon qu'un jet de fluide soit pulvérisé pendant le processus de coupe en direction des particules en fusion éjectées par le jet d'oxycoupage, afin de réduire les émissions de fumées.

Conformément à une caractéristique avantageuse, le jet de pulvérisation est dirigé vers la zone sommet de la parabole de chute des particules en fusion.

De préférence alors, l'organe de pulvérisation est déplacé horizontalement en synchronisme avec les organes de coupe et d'ébavurage, les jets d'oxycoupage d'ébavurage et de pulvérisation restant dans un même plan vertical.

Il sera en outre avantageux de prévoir que l'organe de pulvérisation est porté par le support de l'organe d'ébavurage passant dans la saignée d'oxycoupage.

Avantageusement encore, le support des organes d'ébavurage et de pulvérisation est mis en vibration verticale pendant le processus d'oxycoupage. Une telle mise en vibration verticale permet de faciliter la progression du support passant dans la saignée d'oxycoupage.

L'invention concerne également un dispositif de mise en oeuvre du procédé d'oxycoupage précité, le dispositif étant remarquable en ce qu'il comporte un chariot déplaçable horizontalement sur des rails associés, ledit chariot portant des supports d'un organe de coupe et d'un organe d'ébavurage qui surplombent la pièce à couper, le support de l'organe d'ébavurage incluant une lame mince destinée à passer dans la saignée d'oxycoupage, ladite lame mince qui supporte l'organe d'ébavurage supportant également un organe de pulvérisation de fluide.

La présence de cette lame mince est extrêmement intéressante, dans la mesure où elle permet d'organiser le support des organes de coupe, d'ébavurage et de pulvérisation par le dessus de la pièce à couper, libérant ainsi totalement l'espace situé en-dessous de ladite pièce. En outre, par sa rigidité, la lame mince permet de garantir le positionnement relatif des différents organes supportés, tant dans leur position que dans leur inclinaison.

Avantageusement, les organes d'ébavurage et de pulvérisation sont tous deux montés en extrémité de la lame mince, en étant inclinés chacun vers le haut selon un angle respectif prédéterminé.

L'amenée des fluides nécessaires .pour les organes d'ébavurage et de pulvérisation pourrait être organisée par des moyens disposés sous la pièce à couper. Toutefois, pour éviter les inconvénients auxquels on peut s'attendre du fait de la projection de métal fondu, il est intéressant de prévoir une amenée par le dessus de la pièce.

A cet effet, et conformément à une autre caractéristique avantageuse, la lame mince est évidée pour amener le ou les fluides nécessaires.

Il sera également intéressant de prévoir que la lame mince soit couplée à un vibrateur pouvant générer des vibrations de faible amplitude dans une direction verticale, ce pour éviter tout risque de collage de gouttes de métal dans la saignée, qui nuirait à la bonne progression de la lame mince lors du processus d'oxycoupage.

De préférence encore, les supports des organes de coupe, d'ébavurage et de pulvérisation sont réglables individuellement en position dans une direction verticale. Ces réglages individuels sont importants pour pouvoir s'adapter à des pièces à couper qui sont d'épaisseur variable.

Conformément à un mode d'exécution particulier, le chariot se déplace le long de la pièce, et porte une poutre en porte-à-faux sur laquelle sont montés les supports des organes de coupe, d'ébavurage et de pulvérisation par l'intermédiaire d'un étrier monté coulissant sur ladite poutre.

En variante, lorsqu'il s'agit de l'oxycoupage d'une pièce de coulée continue, il est avantageux de prévoir que le chariot se déplace au-dessus de la pièce et porte une pince mobile destinée à serrer ladite pièce par ses faces latérales, ledit chariot pouvant recevoir un châssis amovible portant un coulisseau déplaçable transversalement à la direction de coulée, lequel coulisseau porte les supports des organes de coupe, d'ébavurage et de pulvérisation. Ceci permet en particulier d'utiliser l'installation décrite dans le document WO-A-99/16570 précité en remplaçant l'unité de coupe et d'ébavurage à jet d'oxycoupage horizontal par une autre unité solidaire du châssis amovible à jet d'oxycoupage vertical conformément à l'invention.

D'autres caractéristiques et avantages de l'invention ressortiront plus clairement à la lumière de la description qui va suivre et du dessin annexé, concernant des modes particuliers de réalisation, en référence aux figures où :
- la figure 1 illustre schématiquement une installation mettant en oeuvre le procédé d'oxycoupage selon l'invention, conformément à une première variante à deux chariots séparés dont le déplacement horizontal est organisé en synchronisme,
- la figure 2 est une vue schématique illustrant une autre variante de mise en oeuvre du procédé d'oxycoupage selon l'invention, dans laquelle le support des organes d'ébavurage et de pulvérisation passe dans la saignée d'oxycoupage,
- la figure 3 illustre à plus grande échelle les organes utilisés dans le cadre de cette dernière variante, avec une lame mince qui supporte les organes d'ébavurage et de pulvérisation,
- la figure 4 est une vue en bout des composants illustrés en figure 3, permettant de mieux distinguer le passage de la lame mince dans la saignée d'oxycoupage,
- la figure 5 est une coupe selon V-V de la figure 3, permettant de distinguer les canalisations de passage de fluides à l'intérieur de la lame mince,
- les figures 6 et 7 illustrent respectivement en bout et en coupe un mode de réalisation du dispositif de mise en oeuvre du procédé, avec un chariot porteur se déplaçant latéralement le long de la pièce à couper,
- les figures 8 et 9 sont des vues en élévation et en bout d'une autre variante du dispositif, dans laquelle le chariot se déplace au-dessus d'une pièce de coulée continue et porte une pince mobile destinée à serrer la pièce.

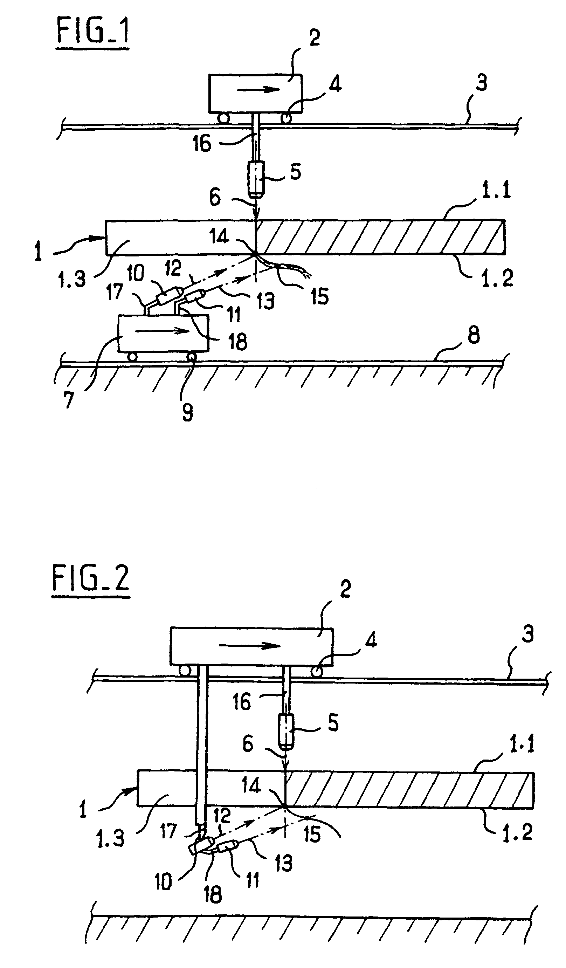

La figure 1 illustre une pièce d'acier telle qu'une brame, billette ou bloom en train d'être coupée conformément au procédé d'oxycoupage de l'invention. La pièce 1 à couper présente une face supérieure 1.1 et une surface inférieure 1.2, et elle repose horizontalement sur des appuis non représentés sur la figure. Un chariot 2 peut se déplacer sur des rails 3 au moyen de roulements 4, et ce chariot porte un organe de coupe 5 qui est un chalumeau d'oxycoupage, au moyen d'un support rigide 16. L'organe de coupe 5 est positionné de façon que le jet d'oxycoupage noté 6 attaque la face supérieure 1.1 de la pièce 1 selon une direction sensiblement verticale. En dessous de la pièce 1, un autre chariot 7 est prévu, déplaçable sur des rails 8 par des roulements associés 9. Ce chariot 7 porte un organe d'ébavurage 10 par un support 17, lequel organe d'ébavurage est positionné de telle façon que le jet d'ébavurage noté 12 attaque la face inférieure 1.2 de la pièce 1 selon une direction oblique restant pointée vers le point de sortie noté 14 du jet d'oxycoupage 6.

Dans ce mode de réalisation, plus particulièrement destiné à une opération de refendage, la coupe et l'ébavurage simultané se font par déplacement horizontal synchrone des organes de coupe 5 et d'ébavurage 10, grâce à un pilotage adéquat du déplacement des chariots associés 2, 7. Il est important de noter que l'ébavurage réalisé par chalumeau s'effectue "en plafond", c'est-à-dire sous la pièce en cours de coupe, ce qui est très avantageux par rapport aux systèmes traditionnels à jet d'oxycoupage horizontal, comme celui du document WO-A-99/16570 précité. En effet, l'ébavurage en position plafond est particulièrement efficace dans la mesure où cette position est très favorable au détachement et à la chute plus facile et rapide des cordons ébavurés grâce à l'effet des forces gravitationnelles. En outre, comme l'organe d'ébavurage 10 est en arrière du jet d'oxycoupage, aucun obstacle de proximité ne vient perturber l'éjection des particules vers l'aval.

Sur la figure 1, il convient de noter également la présence d'un organe de pulvérisation 11 monté sur un support associé 18 porté par le chariot 7 supportant l'organe d'ébavurage 10.

Ainsi, on positionne sous la pièce 1 cet organe de pulvérisation 11 de façon qu'un jet de fluide 13 soit pulvérisé pendant le processus de coupe en direction des particules en fusion éjectées par le jet d'oxycoupage 6, afin de réduire les émissions de fumées. Dans la pratique, l'agencement des organes de coupe 5, d'ébavurage 10, et de pulvérisation 11 sera tel que les trois jets correspondants respectivement 6, 12, 13 soient contenus dans un même plan vertical tout au long du processus de coupe. Le fluide pulvérisé, qui peut être de l'eau ou de l'oxygène, assure une fonction de fluide extincteur au regard des particules incandescentes. Grâce à cette projection de fluide froid sur les particules d'acier en post-combustion en provenance du jet d'oxycoupage et d'ébavurage, on parvient à réduire considérablement le volume des fumées émises.

Dans le mode de réalisation précité, les supports des organes de coupe d'une part et des organes d'ébavurage et de pulvérisation d'autre part, sont agencés de part et d'autre de la pièce 1 à couper. Ceci suppose l'organisation d'une bonne synchronisation de la commande d'avancement des deux chariots 2 et 7, de façon que les jets 12 et 13 soient toujours correctement dirigés par rapport à la sortie du jet d'oxycoupage 6 situé en front de la saignée d'oxycoupage notée 1.3. L'invention prévoit toutefois une variante de réalisation dans laquelle les supports sont portés d'un même côté de la pièce à couper, en particulier en étant disposés au-dessus de ladite pièce.

On va maintenant décrire cette variante qui est illustrée schématiquement sur la figure 2.

Conformément à l'invention, il est alors prévu que le déplacement synchrone des organes de coupe 5, d'ébavurage 10, et de pulvérisation 11 est réalisé en agençant les supports accouplés desdits organes d'un même côté de la pièce, avec l'un desdits supports qui passe dans la saignée d'oxycoupage 1.3. En l'espèce, les supports 17 et 18 des organes d'ébavurage 10 et de pulvérisation 11 se raccordent à un support commun qui est une lame 20 qui est suffisamment mince pour passer dans la saignée d'oxycoupage 1.3. Ainsi, les supports 16, 20 des organes de coupe 5 et d'ébavurage 10 sont disposés au-dessus de la pièce 1, et c'est le support 20 de l'organe d'ébavurage 10 qui passe dans la saignée d'oxycoupage 1.3. On pourra naturellement prévoir une variante inverse, dans laquelle le chariot 2 ne surplomberait pas la pièce 1, mais serait disposé en-dessous. Il est toutefois plus intéressant de prévoir cette disposition en surplomb, qui permet de dégager complètement l'espace situé en-dessous de la pièce à couper.

Le support rigide procuré par la lame 20 qui passe dans la saignée d'oxycoupage 1.3 permet d'éviter une opération de synchronisation complexe entre deux chariots séparés, et assure la permanence du positionnement relatif des trois organes 5, 10, 11, et donc le parfait positionnement des trois jets associés 6, 12, 13.

Comme pour la variante de la figure 1, la lame mince 20 porte un organe de pulvérisation 11 dont le jet 13 est dirigé vers les particules en fusion éjectées par le jet d'oxycoupage 6. Il est intéressant que ce jet de pulvérisation 13 soit dirigé vers la zone notée 15 qui correspond au sommet de la parabole de chute des particules en fusion. En effet, les particules sont d'abord soumises à l'énergie cinétique des jets d'oxycoupage 6 et d'ébavurage 12, et leur trajectoire présente une inflexion à tangente horizontale avant le début d'une trajectoire parabolique correspondant à la seule influence des forces de gravité. Ce point d'inflexion, qui correspond à la zone 15 précitée, constitue la cible idéale pour le jet de pulvérisation, car les particules ont alors une vitesse sensiblement nulle.

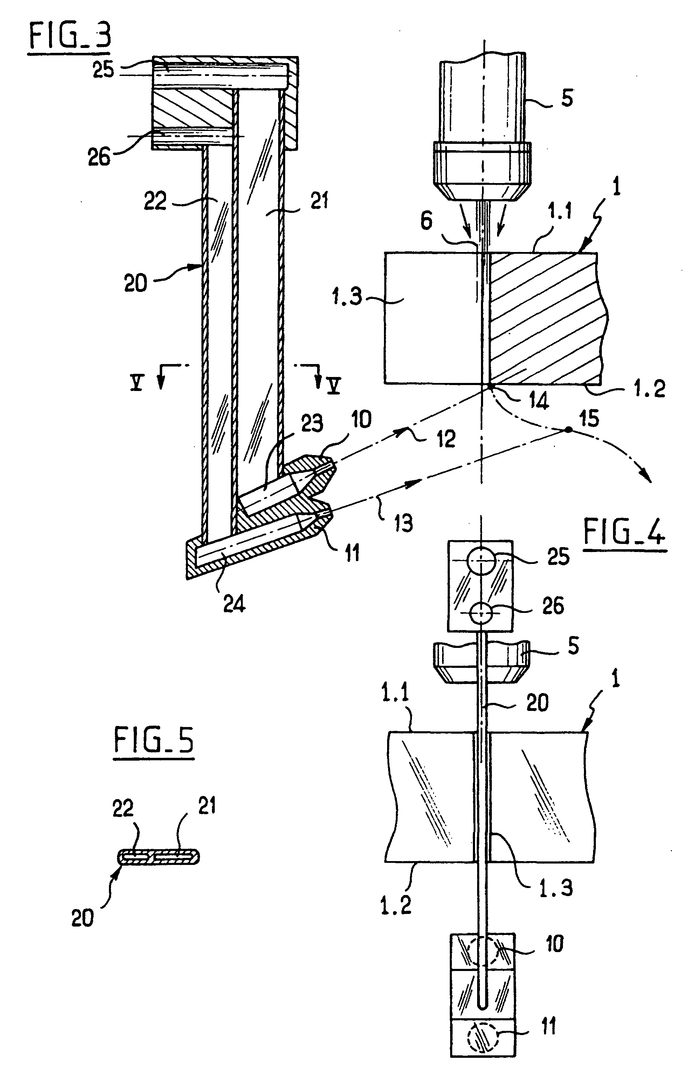

Les figures 3 à 5 permettent de mieux distinguer l'agencement des organes de coupe 5, d'ébavurage 10 et de pulvérisation 11, avec leurs jets respectifs 6, 12, 13. On a représenté en coupe la lame mince 20 qui supporte les organes 10, 11. La lame mince 20 supportant les organes 10, 11 est en l'espèce évidée pour amener les fluides nécessaires. On distingue ainsi deux canalisations 21, 22 arrivant aux espaces intérieurs 23, 24 des organes 10, 11, pour convoyer les fluides concernés qui arrivent par les embouchures d'entrée 25, 26. Le fluide d'ébavurage sera en général de l'oxygène, mais on peut aussi prévoir de l'eau ou tout autre fluide équivalent. Pour la pulvérisation, on choisira en général de l'eau froide. Il est intéressant de noter que la présence d'eau froide dans lame mince est avantageuse pour le refroidissement de cet organe pendant le processus de coupe et une fois ce processus terminé.

Les organes d'ébavurage 10 et de pulvérisation 11 sont tous deux montés en extrémité de la lame mince 20, en étant inclinés chacun vers le haut selon un angle respectif prédéterminé. Le choix de ces angles correspond à une optimisation de l'action d'ébavurage pour le jet 12 qui pointe vers le point de sortie 14 du jet d'oxycoupage 6, et à une optimisation de l'action de pulvérisation pour le jet 13 qui est dirigé vers le sommet de la parabole de chute des particules en fusion. Dans la pratique, les supports des organes de coupe 5, d'ébavurage 10 et de pulvérisation 11, seront réglables en position dans. une direction verticale. Le réglage individuel de l'organe de coupe 5 d'une part et de la lame 20 d'autre part permet ainsi de s'adapter à différentes épaisseurs de pièces à couper.

Il sera avantageux de prévoir en outre que la lame mince 20 soit couplée à un vibrateur pouvant générer des vibrations de faible amplitude dans une direction verticale. Un tel vibrateur (non représenté ici) sera de préférence intégré dans le support de la lame mince 20. La mise en vibration verticale de la lame mince 20 pendant le processus d'oxycoupage a pour effet de cisailler les éventuelles gouttes de métal venant se coller sur la lame mince dans la saignée. On est alors assuré de ne pas perturber l'avance des organes 5, 10, 11 lors du processus d'oxycoupage.

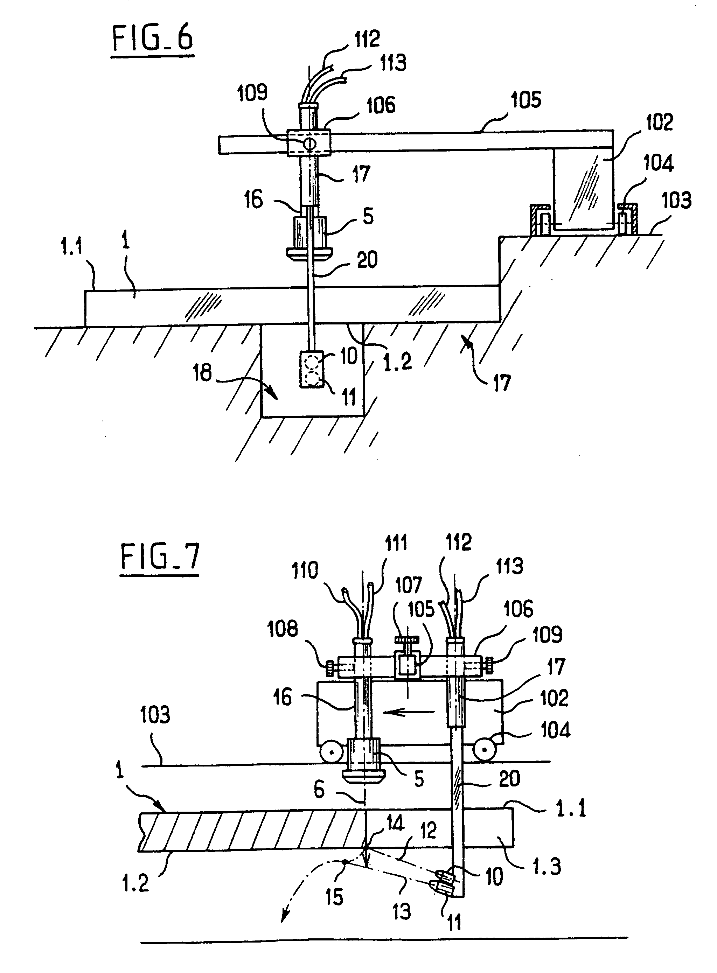

On va maintenant décrire un mode d'exécution particulier du dispositif de mise en oeuvre du procédé selon l'invention, en référence aux figures 6 et 7.

La brame à couper 1 est positionnée sur une aire de refendage 17 équipée d'une fosse 18 pour la sortie du jet d'oxycoupage. Un chariot automoteur 102 se déplace par ses roulements 104 sur une piste 103 le long de la pièce 1, parallèlement à l'axe longitudinal de la brame. Le chariot 102 porte une poutre en porte à faux ou potence 105, ici de section rectangulaire, sur laquelle est monté de façon coulissante un étrier 106 surplombant la brame à couper. L'étrier 106 peut être bloqué en position sur la potence 105 par une vis 107. Ainsi que cela est mieux visible sur la figure 3, l'étrier 106 supporte les supports 16, 17 respectivement associés à l'organe de coupe 5 et aux organes d'ébavurage et de pulvérisation 10, 11. Ces supports 16, 17 sont fixés de manière amovible à l'étrier 106 avec un réglage en hauteur permettant le positionnement adéquat des organes correspondants. Le coulissement des supports 16, 17 est vertical, dans un plan qui est celui des trois jets 6, 12, 13. Chaque support .16, 17 peut être bloqué à la hauteur désirée par des vis associées 108, 109. La figure 3 permet de visualiser le positionnement géométrique précis de la position relative du jet d'oxycoupage 6, du jet d'ébavurage 12, et du jet de pulvérisation 13 par rapport à la brame à couper. On a représenté également des canalisations d'alimentation des différents organes, qui sont branchées en tête des supports 16, 17. On distingue ainsi des canalisations 110, 111 servant à alimenter l'organe de coupe en oxygène de chauffe et de coupe et en gaz combustible, et les canalisations 112, 113 servant à alimenter l'organe d'ébavurage et l'organe de pulvérisation en oxygène ou eau d'ébavurage, et en eau d'extinction de la post-combustion.

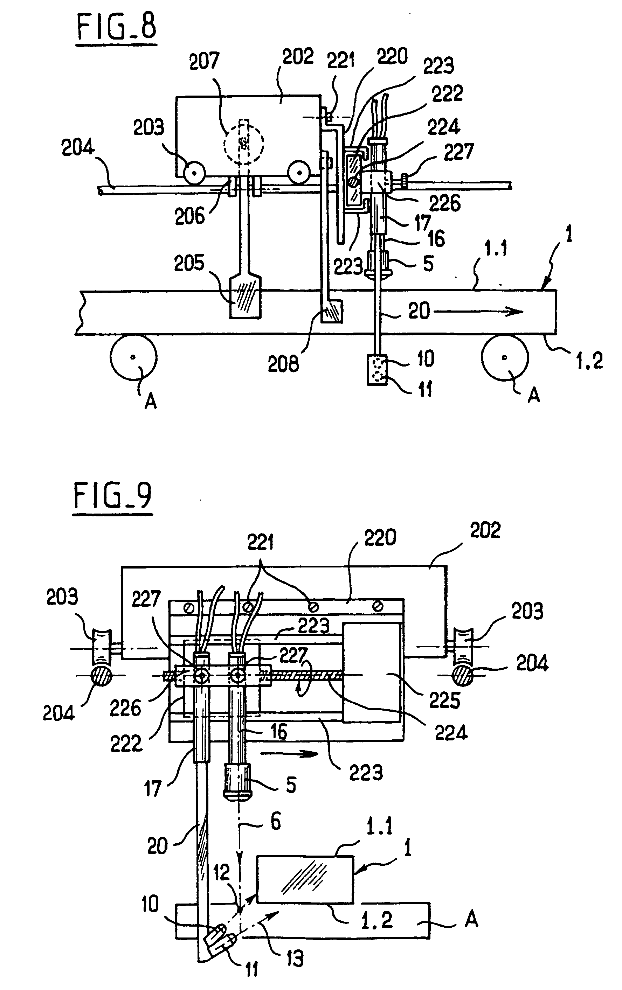

On va maintenant illustrer un autre mode de réalisation en référence aux figures 8 à 10, correspondant à l'équipement d'une machine d'oxycoupage du type de celle qui est décrite dans le document WO-A-99/16570. La machine connue, plus particulièrement destinée à l'oxycoupage d'une pièce de coulée continue, comporte un chariot équipé d'une pince mobile destinée à serrer la pièce par ses faces latérales. Dans la machine connue, il est prévu, en variante du système de coupe pendulaire sans ébavurage du cordon de coupe, un système de châssis portant un organe de coupe et un organe d'ébavurage, agencés de telle façon que le jet d'oxycoupage soit horizontal. Il suffit alors de remplacer cette unité de coupe par une autre unité agencée conformément à l'invention afin d'effectuer une coupe par un jet d'oxycoupage vertical, avec un ébavurage et une pulvérisation par le dessous de la pièce de coulée continue. Ceci permet donc de profiter de nombreux organes déjà existants sur la machine utilisée.

On a représenté ici schématiquement les différents composants de la machine, et l'on pourra se référer pour plus de détails au document WO-A-99/16570.

On distingue un chariot 202 se déplaçant par des galets 203 sur des rails associés 204 surplombant le produit à couper 1. Les deux bras 205 d'une pince mobile, montés pivotants sur des étriers 206 solidaires du chariot 202, peuvent être rapprochés ou éloignés par actionnement d'un vérin associé 207. La pièce 1 de coulée continue se déplace sur des rouleaux d'appui A et, lorsque la pince mobile 205 est serrée, le chariot 202 est entraîné par le mouvement de la pièce à couper. La synchronisation avec l'avance du produit est ainsi totalement assurée. Un palpeur motorisé 208 entre en contact avec le produit, ce qui démarre la séquence d'oxycoupage réalisée par l'organe de coupe associé. On a en l'espèce remplacé l'organe de coupe pendulaire ou l'organe de coupe à jet d'oxycoupage horizontal classiquement utilisé par une unité d'oxycoupage conforme à l'invention.

On distingue en effet un châssis amovible 220 fixé à la structure du chariot 202 par des boulons 221. Ce châssis amovible 220 porte des glissières horizontales 223 entre lesquelles se déplace horizontalement un coulisseau 222. Le coulisseau 222 est entraîné par une vis sans fin horizontale 224 couplée à l'arbre de sortie d'un moteur d'entraînement 225. Le coulisseau 222 porte un étrier 226 sur lequel sont montés les supports 16, 17 respectivement associés à l'organe de coupe 5 d'une part, et aux organes d'ébavurage et de pulvérisation 10, 11 d'autre part. Le réglage en hauteur des supports 16, 17 est bien entendu prévu, avec un blocage en position par des boulons associés 227.

Une fois les supports 16, 17 en place, de telle façon que le jet d'oxycoupage et le jet d'ébavurage se rencontrent en un point qui est au niveau de la face inférieure de la brame à couper, il suffit d'actionner le moteur d'actionnement 225 pour enclencher le déplacement horizontal des organes 5, 10, 11, et de procéder ainsi à une phase de coupe, avec ébavurage simultané et pulvérisation de fluide en vue d'une réduction des fumées émises. Le déplacement du coulisseau 222 transversalement à la direction de coulée est effectué avec une grande précision, de sorte que l'on est assuré d'un parfait enlèvement du cordon de coulée au niveau de la face inférieure de la brame. Le système vis-écrou constitué par la vis sans fin 224 et le coulisseau 222 assure une progression régulière et précise des différents organes précités.

On est ainsi parvenu à réaliser un procédé et un dispositif d'oxycoupage permettant un traitement efficace du cordon de soudage et des projections de post-combustion pour la réduction des fumées, et pour tous les types de pièces à couper, quelle que soit la largeur de celles-ci.

## Revendications

1. Procédé d'oxycoupage d'une pièce d'acier, dans lequel on positionne un organe de coupe (5) de façon que le jet d'oxycoupage (6) soit dirigé vers une première face de la pièce de coupe (1) et un organe d'ébavurage (10) de façon que le jet d'ébavurage (12) soit dirigé vers une seconde face opposée à la première en direction du point de sortie (1) du jet d'oxycoupage, afin de réaliser un ébavurage simultané du cordon de coupe se formant sur ladite seconde face, le positionnement des.organes de coupe (5) et d'ébavurage (10) étant tel que le jet d'oxycoupage (6) attaque la face supérieure (1.1) de la pièce (1) selon une direction sensiblement verticale, tandis que le jet d'ébavurage (12) attaque la face inférieure (1.2) de ladite pièce selon une direction oblique restant pointée vers le point de sortie (14) du jet d'oxycoupage (6), la coupe et l'ébavurage simultané se faisant par déplacement horizontal synchrone des organes de coupe (5) et d'ébavurage (10), **caractérisé en ce qu'**on positionne sous la pièce (1) un organe de pulvérisation (11) de façon qu'un jet de fluide (13) soit pulvérisé pendant le processus de coupe en direction des particules en fusion éjectées par le jet d'oxycoupage (6), afin de réduire les émissions de fumées.

2. Procédé selon la revendication 1, **caractérisé en ce que** le jet de pulvérisation (13) est dirigé vers la zone (15) sommet de la parabole de chute des particules en fusion.

3. Procédé selon la revendication 1 ou la revendication 2, **caractérisé en ce que** l'organe de pulvérisation (11) est déplacé horizontalement en synchronisme avec les organes de coupe (5) et d'ébavurage (10), les jets d'oxycoupage (6), d'ébavurage (12) et de pulvérisation (13) restant dans un même plan vertical.

4. Procédé selon l'une des revendications 1 à 3, **caractérisé en ce que** l'organe de pulvérisation (11) est porté par le support (20) de l'organe d'ébavurage (10) passant dans la saignée d'oxycoupage (1.3).

5. Procédé selon la revendication 4, **caractérisé en ce que** le support (20) des organes d'ébavurage (10) et de pulvérisation (11) est mis en vibration verticale pendant le processus d'oxycoupage.

6. Dispositif de mise en oeuvre du procédé d'oxycoupage selon l'une des revendications 1 à 5, **caractérisé en ce qu'**il comporte un chariot (2 ; 102 ; 202) déplaçable horizontalement sur des rails associés, ledit chariot portant des supports (16, 17) d'un organe de coupe (5) et d'un organe d'ébavurage (10) qui surplombent la pièce à couper (1), le support (17) de l'organe d'ébavurage (10) incluant une lame mince (20) destinée à passer dans la saignée d'oxycoupage (1.3), ladite lame mince (20) qui supporte l'organe d'ébavurage (10) supportant également un organe (11) de pulvérisation de fluide.

7. Dispositif selon la revendication 6, **caractérisé en ce que** les organes d'ébavurage (10) et de pulvérisation (11) sont tous deux montés en extrémité de la lame mince (20), en étant inclinés chacun vers le haut selon un angle respectif prédéterminé.

8. Dispositif selon la revendication 6 ou la revendication 7, **caractérisé en ce que** la lame mince (20) est évidée pour amener le ou les fluides nécessaires.

9. Dispositif selon l'une quelconque des revendications 6 à 8, **caractérisé en ce que** la lame mince (20) est couplée à un vibrateur pouvant générer des vibrations de faible amplitude dans une direction verticale.

10. Dispositif selon l'une des revendications 6 à 9, **caractérisé en ce que** les supports (16, 17) des organes de coupe (5), d'ébavurage (10) et de pulvérisation (11) sont réglables individuellement en position dans une direction verticale.

11. Dispositif selon l'une des revendications 6 à 10, **caractérisé en ce que** le chariot (102) se déplace le long de la pièce (1), et porte une poutre en porte-à-faux (105) sur laquelle sont montés les supports (16, 17) des organes de coupe (5), d'ébavurage (10) et de pulvérisation (11) par l'intermédiaire d'un étrier (106) monté coulissant sur ladite poutre.

12. Dispositif selon l'une des revendications 6 à 10, pour l'oxycoupage d'une pièce de coulée continue, **caractérisé en ce que** le chariot (202) se déplace au-dessus de la pièce (1) et porte une pince mobile (205) destinée à serrer ladite pièce par ses faces latérales, ledit chariot pouvant recevoir un châssis amovible (220) portant un coulisseau (222) déplaçable transversalement à la direction de coulée, lequel coulisseau porte les supports (16, 17) des organes de coupe (5), d'ébavurage (10) et de pulvérisation (11).

## Claims

1. A method of oxygen cutting a piece of steel, in which a cutter member (5) is positioned in such a manner that the cutting jet (6) is directed towards a first face of the piece to be cut (1) and a trimmer member (10) is positioned in such a manner that the trimming jet (12) is directed towards a second face, opposite from the first face, towards the outlet point (14) of the oxygen-cutting jet so as to perform trimming simultaneously on the cutting bead as it forms on said second face, with the positioning of the cutter and trimmer members (5, 10) being such that the cutting jet (6) is applied to the top face (1.1) of the piece (1) in a substantially vertical direction, while the trimming jet (12) is applied to the bottom face (1.2) of said piece in an oblique direction that remains pointing towards the outlet point (14) of the cutting jet (6), simultaneous cutting and trimming being performed by moving the cutter and trimmer members (5, 10) horizontally in synchronous manner, the method being **characterized in that** a sprayer member (11) is positioned beneath the piece (1) in such a manner that a fluid jet (13) is sprayed during the cutting process towards the molten particles ejected by the cutting jet (6) so as to reduce fume emission.

2. A method according to claim 1, **characterized in that** the spray jet (13) is directed towards the zone (15) at the top of the parabolic trajectory followed by falling molten particles.

3. A method according to claim 1 or claim 2, **characterized in that** the sprayer member (11) is moved horizontally synchronously with the cutter and trimmer members (5, 10), the cutting, trimming, and spray jets (6, 12, 13) remaining in a common vertical plane.

4. A method according to any one of claims 1 to 3, **characterized in that** the sprayer member (11) is carried by the support (20) for the trimmer member (10) passing through the cut slot (1.3).

5. A method according to claim 4, **characterized in that** the support (20) for the trimmer and sprayer members (10, 11) is set into vertical vibration during the cutting process.

6. Apparatus for implementing the oxygen-cutting method according to any one of claims 1 to 5, the apparatus being **characterized in that** it comprises a carriage (2; 102; 202) that is horizontally movable on associated rails, said carriage carrying supports (16, 17) for a cutter member (5) and for a trimmer member (10), which supports overlie the piece to be cut (1), the support (17) for the trimmer member (10) including a thin blade (20) for passing through the cut slot (1.3), said thin blade (20) which supports the trimmer member (10) also supporting a fluid sprayer member (11).

7. Apparatus according to claim 6, **characterized in that** the trimmer and sprayer members (10, 11) are both mounted at the end of the thin blade (20), each being inclined upwards at a respective predetermined angle.

8. Apparatus according to claim 6 or claim 7, **characterized in that** the thin blade (20) is hollow for feeding the fluid(s) required.

9. Apparatus according to any one of claims 6 to 8, **characterized in that** the thin blade (20) is coupled to a vibrator capable of imparting small-amplitude vibration in a vertical direction.

10. Apparatus according to any one of claims 6 to 9, **characterized in that** the supports (16, 17) for the cutter, trimmer, and sprayer members (5, 10, 11) are individually adjustable in position in a vertical direction.

11. Apparatus according to any one of claims 6 to 10, **characterized in that** the carriage (102) moves along the piece (1) and carries a cantilevered-out beam (105) on which the supports (16, 17) for the cutter, trimmer, and sprayer members (5, 10, 11) are mounted via a sleeve (106) slidably mounted on said beam.

12. Apparatus according to any one of claims 6 to 10, for oxygen cutting a continuous casting, the apparatus being **characterized in that** the carriage (202) moves above the casting (1) and carries a moving clamp (205) for clamping onto said casting via its side faces, said carriage being capable of receiving a removable frame (220) carrying a slider (222) that is movable across the casting direction, which slider carries the supports (16, 17) for the cutter, trimmer, and sprayer members (5, 10, 11).

## Patentansprüche

1. Verfahren zum Brennschneiden eines Werkstückes aus Stahl, bei dem ein Schneideelement (5) derart positioniert wird, dass der Brennschneidestrahl (6) auf eine erste Fläche des zu schneidenden Werkstückes (1) gerichtet ist, und ein Entgratelement (10) derart positioniert wird, dass der Entgratstrahl (12) in Richtung des Austrittspunktes (14) des Brennschneidestrahls auf eine zweite Fläche gerichtet ist, die der ersten abgewandt ist, um ein gleichzeitiges Entgraten des Schneidegrates durchzuführen, der sich auf der genannten zweiten Fläche bildet, wobei die Positionierung des Schneideelements (5) und des Entgratelements (10) derart ist, dass der Brennschneidestrahl (6) an der oberen Fläche (1.1) des Werkstücks (1) in einer im wesentlichen vertikalen Richtung angreift, während der Entgratstrahl (12) an der unteren Fläche (1.2) des genannten Werkstücks in einer schrägen Richtung angreift, die auf den Austrittspunkt (14) des Brennschneidestrahls (6) gerichtet bleibt, wobei das Schneiden und das gleichzeitige Entgraten durch eine synchrone horizontale Verschiebung des Schneideelements (5) und des Entgratelements (10) erfolgen, **dadurch gekennzeichnet, dass** unter dem Werkstück (1) ein Sprühelement (11) positioniert wird, derart, dass während des Schneidevorgangs in Richtung der von dem Brennschneidestrahl (6) weggeschleuderten schmelzflüssigen Partikel ein Fluidstrahl (13) gesprüht wird, um die Rauchentwicklungen zu verringern.

2. Verfahren nach Anspruch 1, **dadurch gekennzeichnet, dass** der Sprühstrahl (13) auf die Scheitelzone (15) der Fallparabel der schmelzflüssigen Partikel gerichtet ist.

3. Verfahren nach Anspruch 1 oder Anspruch 2, **dadurch gekennzeichnet, dass** das Sprühelement (11) synchron mit dem Schneideelement (5) und dem Entgratelement (6) horizontal verschoben wird, wobei der Brennschneidestrahl (6), der Entgratstrahl (12) und der Sprühstrahl (13) in einer gleichen vertikalen Ebene bleiben.

4. Verfahren nach einem der Ansprüche 1 bis 3, **dadurch gekennzeichnet, dass** das Sprühelement (11) von dem Träger (20) des Entgratelements (10) getragen wird, der den Brennschnittspalt (1.3) durchläuft.

5. Verfahren nach Anspruch 4, **dadurch gekennzeichnet, dass** der Träger (20) des Entgratelements (10) und des Sprühelements (11) während des Brennschneidevorgangs in eine vertikale Schwingung versetzt wird.

6. Vorrichtung zum Durchführen des Brennschneideverfahrens nach einem der Ansprüche 1 bis 5, **dadurch gekennzeichnet, dass** sie einen Wagen (2; 102; 202) umfasst, der auf dazugehörigen Schienen horizontal verschiebbar ist, wobei der Wagen Träger (16, 17) für ein Schneideelement (5) und ein Entgratelement (10) trägt, die senkrecht über dem zu schneidenden Werkstück (1) hängen, und wobei der Träger (17) des Entgratelements (10) eine dünne Lamelle (20) enthält, die dazu bestimmt ist, den Brennschnittspalt (1.3) zu durchlaufen, wobei die dünne Lamelle (20), die das Entgratelement (10) trägt, ferner ein Fluidsprühelement (11) trägt.

7. Vorrichtung nach Anspruch 6, **dadurch gekennzeichnet, dass** sowohl das Entgratelement (10) als auch das Sprühelement (11) am Ende der dünnen Lamelle (20) befestigt sind, indem sie jeweils nach oben in einem jeweiligen vorgegebenen Winkel geneigt sind.

8. Vorrichtung nach Anspruch 6 oder Anspruch 7, **dadurch gekennzeichnet, dass** die dünne Lamelle (20) hohl ist, um das bzw. die erforderlichen Fluide zuzuführen.

9. Vorrichtung nach einem der Ansprüche 6 bis 8, **dadurch gekennzeichnet, dass** die dünne Lamelle (20) an einen Schwingungserzeuger gekoppelt ist, der Schwingungen mit geringer Amplitude in einer vertikalen Richtung erzeugen kann.

10. Vorrichtung nach einem der Ansprüche 6 bis 9, **dadurch gekennzeichnet, dass** die Träger (16, 17) für das Schneideelement (5), das Entgratelement (10) und das Sprühelement (11) individuell in einer vertikalen Richtung in ihrer Position einstellbar sind.

11. Vorrichtung nach einem der Ansprüche 6 bis 10, **dadurch gekennzeichnet, dass** sich der Wagen (102) entlang dem Werkstück (1) verschiebt und einen Kragarm (105) trägt, an dem die Träger (16, 17) für das Schneideelement (5), das Entgratelement (10) und das Sprühelement (11) mittels eines Bügels (106), der verschiebbar an dem Kragarm gelagert ist, befestigt sind.

12. Vorrichtung nach einem der Ansprüche 6 bis 10, zum Brennschneiden eines stranggegossenen Werkstückes, **dadurch gekennzeichnet, dass** sich der Wagen (202) über dem Werkstück (1) verschiebt und eine bewegliche Zange (205) trägt, die dazu bestimmt ist, das genannte Werkstück mittels ihrer Seitenflächen einzuspannen, wobei der Wagen einen lösbaren Rahmen (220) aufnehmen kann, der einen Gleitstößel (222) trägt, der transversal zur Gussrichtung verschiebbar ist, wobei der Gleitstößel die Träger (16, 17) für das Schneideelement (5), das Entgratelement (10) und das Sprühelement (11) trägt.
